**Europäisches Patentamt**

**European Patent Office**

**Office européen des brevets**

(19)

(11) Numéro de publication : **0 326 480 B1**

# (12) FASCICULE DE BREVET EUROPEEN

(45) Date de publication du fascicule du brevet :
**28.10.92 Bulletin 92/44**

(51) Int. Cl.⁵ : **B30B 9/22**

(21) Numéro de dépôt : **89400195.7**

(22) Date de dépôt : **24.01.89**

(54) Appareil pour la séparation en ses deux phases d'une substance composée de matières solides en suspension dans un liquide.

(30) Priorité : **29.01.88 FR 8801071**

(43) Date de publication de la demande :
**02.08.89 Bulletin 89/31**

(45) Mention de la délivrance du brevet :
**28.10.92 Bulletin 92/44**

(84) Etats contractants désignés :
**AT BE CH DE ES FR GB GR IT LI LU NL SE**

(56) Documents cités :
**CH-A- 491 664**
**DE-A- 2 251 265**
**DE-A- 3 411 087**
**FR-A- 1 107 651**
**FR-A- 1 391 871**
**GB-A- 1 194 676**

(73) Titulaire : **Pall, Erno**
**3 Lotissement Le Colombé Frontigny**
**F-57420 Verny (FR)**

(72) Inventeur : **Pall, Erno**
**3 Lotissement Le Colombé Frontigny**
**F-57420 Verny (FR)**

(74) Mandataire : **Mestre, Jean et al**
**c/o CABINET LAVOIX 2, place d'Estienne**
**d'Orves**
**F-75441 Paris Cédex 09 (FR)**

## Description

La présente invention est relative au traitement des substances et, plus particulièrement, au traitement des substances composée de matières solides en suspension dans un liquide.

L'invention concerne plus spécialement la séparation en ses deux phases d'une substance composée de matières solides en suspension dans un liquide.

Dans de nombreuses industries, on se trouve en présence de substances où des matière solides sont en suspension dans un liquide et doivent en être séparées de manière que l'on puisse recueillir indépendamment solides et liquide.

On rencontre ce type de problème par exemple dans les industries alimentaires, telles les industries laitières, brassicoles, vinicoles. Ce problème se rencontre, aussi, plus en aval dans les processus de production industrielle lorsqu'il faut traiter des eaux résiduaires et des effluents par exemple de station d'épuration urbaine.

Il en est de même par exemple en matière fluviale ou portuaire lorsqu'il est nécessaire de traiter des boues qui ont tendances à envaser des chenaux de navigation.

Dans la technique courante connue on utilise, par exemple, des filtres bandes, des filtres presses, des centrifugeuses ou des installations de lyophilisation.

D'autres solutions ont déjà été proposées telles que celles qui se trouvent exposées dans le brevet britannique 1 194 676.

Ce document décrit un appareil qui comprend essentiellement, un groupe extérieur et un groupe intérieur mobiles relativement l'un à l'autre, et qui délimitent une chambre et une enceinte séparées par un corps perméable au liquide et imperméable aux matières solides. Une membrane élastique étanche, expansible, est agencée de manière à permettre la réduction du volume de l'enceinte afin de chasser le liquide de la substance à traiter qui a été placée dans l'enceinte et afin de presser les matières solides contre le corps d'où elle sont détachées par un racloir pour être recueillies séparément.

Une autre solution est exposée dans le document CH-A-491 664. On observera que l'appareil décrit fonctionne pratiquement horizontalement et qu'une telle disposition ne permet pas d'utiliser une bonde de trémie qui soit centrée sur le guide central.

Quelle que soit la technique utilisée, le taux de siccité de la masse obtenue varie de 20 à 25 % au mieux. Dans certains cas, on peut améliorer le taux de siccité en ajoutant à la substance à traiter un adjuvant chimique par exemple de la chaux ou un hydrate de calcium ; dans ce cas on parvient à 35 % environ.

Pour de nombreuses utilisations où les matières solides récupérées sont ensuite valorisées par une mise en oeuvre, ce taux est relativement peu satisfaisant même lorsqu'on a recours à des adjuvants chimiques assurant une floculation. Dans ce dernier cas, l'agent floculant qui est très souvent une molécule organique par exemple un polymère ou une solution de formaldéhyde, se trouve rapidement détruit soit par la température soit par les efforts mécaniques si l'on soumet la masse solide à une compression énergique pour en expulser davantage de liquide.

On comprend donc que le problème du traitement des substances composées de matières solides en suspension dans un liquide pour en séparer les deux phases et récupérer celles-ci d'une manière distincte, à l'état de solide compacté à taux de siccité important et à l'état de liquide pratiquement débarrassé de toute matières solides, présente un grand intérêt industriel et soulève de grandes difficultés pratiques, surtout lorsqu'on doit opérer d'une manière qui n'est pas discontinue.

Le but de l'invention est de remédier à ces inconvénients par un traitement quasi en continu des substances de manière à obtenir un taux de siccité qui avoisine ou dépasse même les 50 % en masse pour les matière solides recueillies, et cela même en l'absence d'adjuvant chimique.

L'invention a pour objet un appareil pour la séparation en ses deux phases d'une substance composée de matières solides en suspension dans un liquide et pour leur récupération distincte à l'état de solides compactés d'un taux de siccité important et à l'état de liquide pratiquement exempt de matières solides, qui comprend, entre autres, un groupe extérieur et un groupe intérieur à symétrie de révolution mobiles relativement l'un à l'autre et qui délimitent une chambre et une enceinte séparées par un corps perméable au liquide et imperméable aux matières solides, et qui comprend une membrane élastique étanche et expansible agencée de manière à permettre la réduction du volume de l'enceinte afin de chasser le liquide de la substance à traiter qui a été placée dans l'enceinte et afin de presser les matières solides contre le corps, et qui comprend un racloir pour détacher s'il y a lieu les matières solides pressées contre le corps afin de les recueillir séparément.

L'appareil selon l'invention est caractérisé en ce qu'il comprend un guide central vertical pour diriger les déplacements relatifs des groupes extérieur et intérieur et une trémie d'alimentation en substance à traiter qui surmonte le groupe extérieur auquel elle est fixée et qui est obturée à sa partie inférieure par une bonde centrée sur le guide.

D'autres caractéristiques de l'invention ressortiront à la lecture de la description et des revendications qui suivent et à l'examen du dessin annexé, donné seulement à titre d'exemple, où :

-la Fig. 1 est une vue, partiellement en coupe méridienne, d'un mode de réalisation d'un appareil selon l'invention ;

-la Fig. 2 est une vue en coupe méridienne du groupe intérieur de l'appareil selon l'invention et illustré sur la Fig. 1 ;

-la Fig. 3 est une vue analogue à celle de la Fig. 1 où l'appareil est représenté dans une position où les groupes intérieur et extérieur sont dégagés l'un de l'autre sans que le dispositif de manoeuvre soit dessiné ;

-la Fig. 4 est une vue analogue à celle de la Fig. 3 dans une autre position relative des groupes extérieur et intérieur de l'appareil de la Fig. 1 ;

-la Fig. 5A et 5B sont des sections de détail, partielles, de modes de réalisation des joints qui assurent l'étanchéité entre groupes extérieur et intérieur de l'appareil selon l'invention ;

-la Fig. 6 est une section partielle de détail d'un mode de réalisation d'un filtre pour l'appareil selon l'invention qui se présente de la manière d'une cartouche interchangeable ;

-la Fig. 7 est une vue de détail d'un mode de réalisation d'une électrovanne de la canalisation d'évacuation de la chambre de l'appareil selon l'invention;

-les Fig. 8A, 8B, 8C sont diverses vues de détail de l'agencement de nettoyage de l'appareil selon l'invention ;

-la Fig. 9 est une illustration d'un mode de réalisation d'un dispositif de manoeuvre de l'appareil selon l'invention pour provoquer les déplacements relatifs des groupes intérieur et extérieur ; et

-la Fig. 10 est une vue d'une autre variante de réalisation du dispositif de manoeuvre de l'appareil selon l'invention.

L'appareil selon l'invention mettant en oeuvre des constituants bien connus dans la technique particulière considérée et des processus d'assemblage classiques en mécanique, on ne décrira que ce qui a trait directement à l'invention. Pour le surplus, le spécialiste en ce domaine puisera dans les solutions courantes à sa disposition pour faire face aux problèmes particuliers qu'il a à résoudre.

Dans la suite de la description, on utilisera un même numéro de référence pour désigner un élément quelle que soit la variante d'exécution où il est mis en oeuvre.

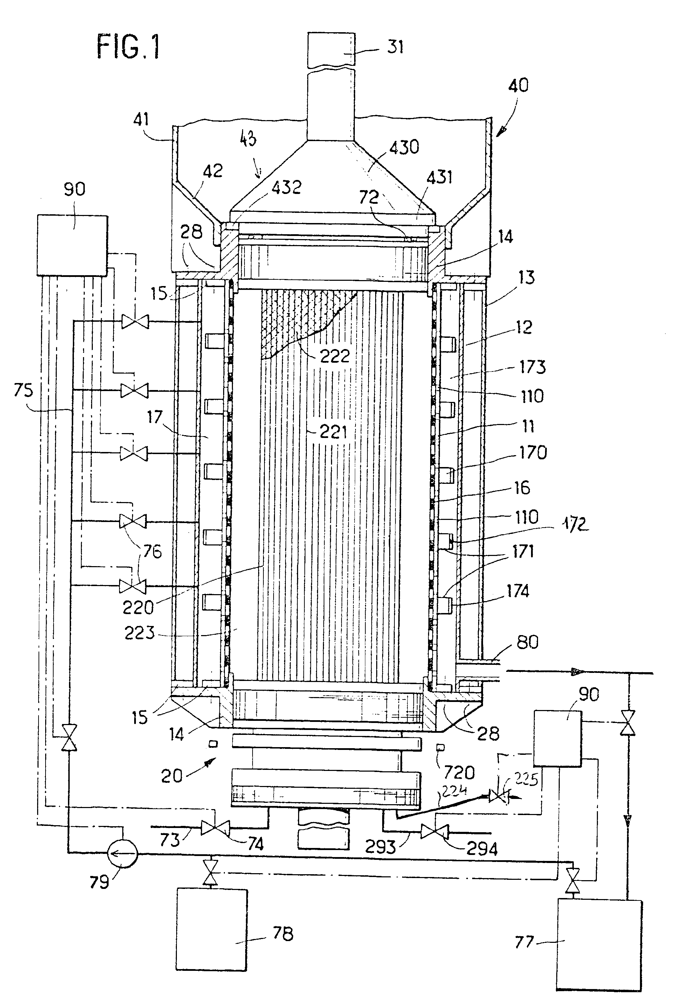

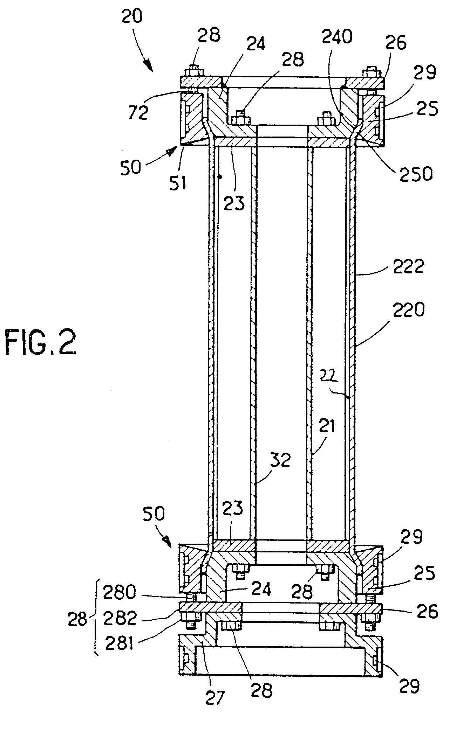

Comme on le voit, notamment sur les Fig. 1 et 2, un appareil selon l'invention pour la séparation en ses deux phases d'une substance composée de matières solides en suspension dans un liquide et pour la récupération distincte à l'état de solides à taux de siccité important et à l'état de liquide pratiquement exempt de matières solides, comprend, entre autres, un groupe extérieur 10 et un groupe intérieur 20. Cet appareil comprend, aussi, un guide 30, une trémie 40, un racloir 50, un dispositif de manoeuvre 60, un agencement de nettoyage 70, des canalisations d'évacuation 80 et des moyens de commande et d'alimentation en fluides 90. On reviendra par la suite sur chacun de ces sous-ensembles qui forment l'appareil selon l'invention.

Comme on le voit, en particulier sur la Fig. 1, le groupe extérieur 10 comprend un corps 11, fait par exemple en une tôle épaisse transpercée de perforations 110. A chacune des extrémités du corps 11 est fixée une virole 14 par exemple par soudure. Ces viroles maintiennent entre elles une enveloppe 12 et une coiffe 13 grâce à l'utilisation de renforts 15 par exemple boulonnés ou vissés, comme schématisé. Les viroles se présentent sous une forme annulaire et de section en équerre et les renforts se présentent à la manière d'anneaux, comme cela ressort clairement des dessins.

Tous ces éléments, de préférence métalliques choisis dans des nuances qui résistent aux milieux dans lesquels ils ont placés, sont assemblés par des techniques courantes classiques.

Comme on l'observe en particulier sur la Fig. 2, le groupe intérieur 20 comprend un tube 21 à chacune des extrémités duquel sont fixées des couronnes 23. Entre ces couronnes est placée une jupe 22, coaxiale au tube 21.

Chacune des couronnes portent une bride 24 à laquelle est associée une contre-bride 25. Chacune des brides 24 porte, en direction de l'extérieur, un collier 26.

Comme on le voit, le collier 26 inférieur porte aussi un manchon 27.

Tous les éléments, métalliques de préférence, sont assemblés par des techniques classiques de soudage ou à l'aide de fixations 28 qui font appel, par exemple, à des goujons ou boulons 280 qui coopérent avec des écrous 281 et qui traversent des trous appropriés 282 ; seules certaines d'entre elles sont dessinées les autres sont seulement suggérées. Une telle technique d'assemblage est classique en mécanique et on ne s'y étendra pas davantage.

Comme on le voit les brides 24 et contre-brides 25, supérieures et inférieures sont identiques et présentent, chacune, des flancs 240 et 250, respectivement, complémentaires coniques. Entre ces flancs est placée une membrane élastique 220. On comprend qu'en agissant sur le serrage des écrous de fixation, on peut rapprocher les flancs coniques complémentaires placés en vis-à-vis et ainsi à la fois fixer et tendre la membrane élastique 220.

Comme on peut l'observer sur la Fig. 1 par exemple la membrane élastique 220 présente des cannelures extérieures 221 et est revêtue sur sa surface extérieure d'une résille élastique 222 pour les raisons que l'on exposera par la suite. Ces membranes et résilles sont fabriquées, par exemple, à partir de matières synthètiques appropriées du commerce.

Comme on peut le voir en regardant la Fig. 2 et les figures de détail 5A et 5B, des joints 29 sont placés à la périphérie des contre-brides 25 et du manchon 27. Ces joints 29, par exemple dilatables, sont de préférence constitués d'un anneau élastique 290 logé dans une gorge 291 qui est creusée d'une rainure 292. Comme illustré, ces joints présentent de préférence au moins un bourrelet 295, par exemple en forme de queue d'aronde, qui est engagé dans une saignée 296 de forme complémentaire. S'il y a lieu, le bourrelet est aussi collé ou autrement fixé de toute manière convenable appropriée à la saignée correspondante pour parfaire la réunion et, si besoin est, l'étanchéité au fluide pour la raison que l'on comprendra par la suite. Dans chaque rainure 292 débouche au moins une tuyauterie 293 munie d'électrovanne(s) 294 appropriée(s). Les électrovannes sont sous la dépendance des moyens de commande 90.

Grâce à cette tuyauterie, on peut injecter ou évacuer un fluide sous pression, par exemple de l'air comprimé pour dilater vers l'extérieur les anneaux, comme illustré en trait discontinu, pour les raisons que l'on exposera par la suite.

Comme on le voit sur la Fig. 2, un racloir 50 est ménagé sur le groupe intérieur 20.

Ce racloir est constitué par une arête 51 de la contre-bride 25 qui présente une inclinaison en contre-dépouille, comme illustré, par exemple avec un angle de 15° environ.

Comme on le voit, l'appareil suivant l'invention comprend, aussi, un guide 30.

Ce guide est constitué d'une colonne 31 et de la paroi intérieure 32 du tube 21 qui peut coulisser contre la paroi extérieure de la colonne.

Les groupes intérieur et extérieur présentent une symétrie de révolution, par exemple cylindrique en général, et sont engagés l'un dans l'autre de manière à être coaxiaux. Ceci résulte clairement de l'examen des figures 1 à 4 notamment ; tube 21 et colonne 31 sont disposés comme illustré de manière que le groupe intérieur et le groupe extérieur puissent se déplacer relativement l'un à l'autre, en translation, suivant leur axe de symétrie.

Comme on le voit nettement sur la Fig. 1, l'appareil suivant l'invention comprend aussi une trémie 40.

Cette trémie est constituée, essentiellement, d'une cuve 41 qui présente un fond en entonnoir 42 au centre duquel se trouve placée une bonde 43. Cette bonde comprend un clapet 430, par exemple en forme de cloche, muni d'un rebord 431 destiné à coopérer avec un siège 432, par exemple ménagé à la partie supérieure d'une des viroles 14 ou rapporté sur cette dernière. S'il y a lieu une garniture d'étanchéité est interposée.

Comme on l'observera, le clapet est monté mobile sur la colonne qui le transperce et peut se déplacer par coulissement sur cette dernière de manière à pouvoir occulter ou démasquer un orifice 433 annulaire que délimitent le rebord 431 et le siège 432. Un joint approprié, non illustré, assure l'étanchéité entre colonne 31 et clapet 430 sans entraver leurs déplacements relatifs. Les déplacements du clapet 430 sont tributaires de ceux du groupe intérieur 20 pour permettre le remplissage de l'enceinte 223 en substance à traiter.

Un dispositif de manoeuvre 60 est intercalé entre le groupe extérieur 10 et le groupe intérieur 20 de manière à les déplacer relativement l'un à l'autre.

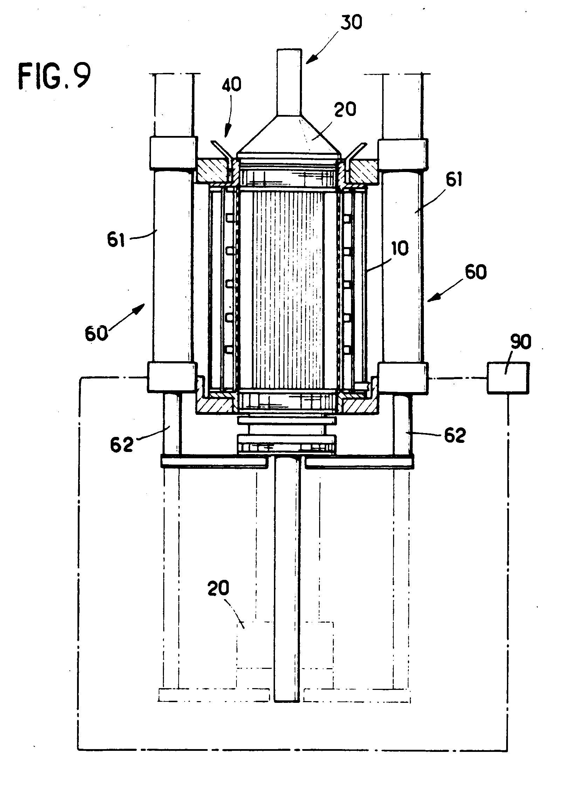

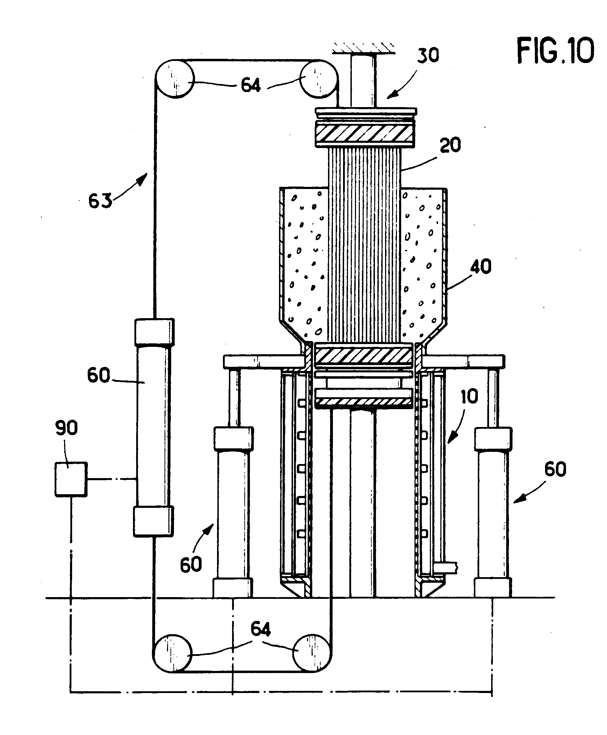

De préférence, ce dispositif est constitué d'un vérin par exemple pneumatique ou hydraulique, avec une tige 61 et un cylindre 62 qui sont reliés respectivement au groupe extérieur 10 et au groupe intérieur 20 comme cela apparaît plus particulièrement en examinant les Fig. 9 et 10. La manière dont la réunion vérin-groupe est faite, est classique.

Ce dispositif de manoeuvre 60 est sous la dépendance des moyens de commande 90.

Comme on le voit en examinant la Fig. 1 en particulier, la chambre 17 est partagée en compartiments 173 superposés par des séparations 170. Ces séparations sont par exemple faites de cloisons 171 distinctes maintenues à distance l'une de l'autre par des entretoises 172. Ces séparations faites en matériaux appropriés sont fixés sur le corps 11 par exemple par soudage. Sur les entretoises sont éventuellement disposés des joints d'étanchéité 174, non représentés en détail pour ne pas surcharger le dessin, par exemple du type de ceux que l'on a décrit précédemment, de manière à pouvoir isoler, s'il y a lieu, les compartiments les uns des autres pour les raisons que l'on comprendra par la suite. Dans ce cas, ces joints coopèrent avec l'enveloppe 12 qui leur fait face. Le cas échéant ces joints sont aussi sous la dépendance des moyens de commande 90.

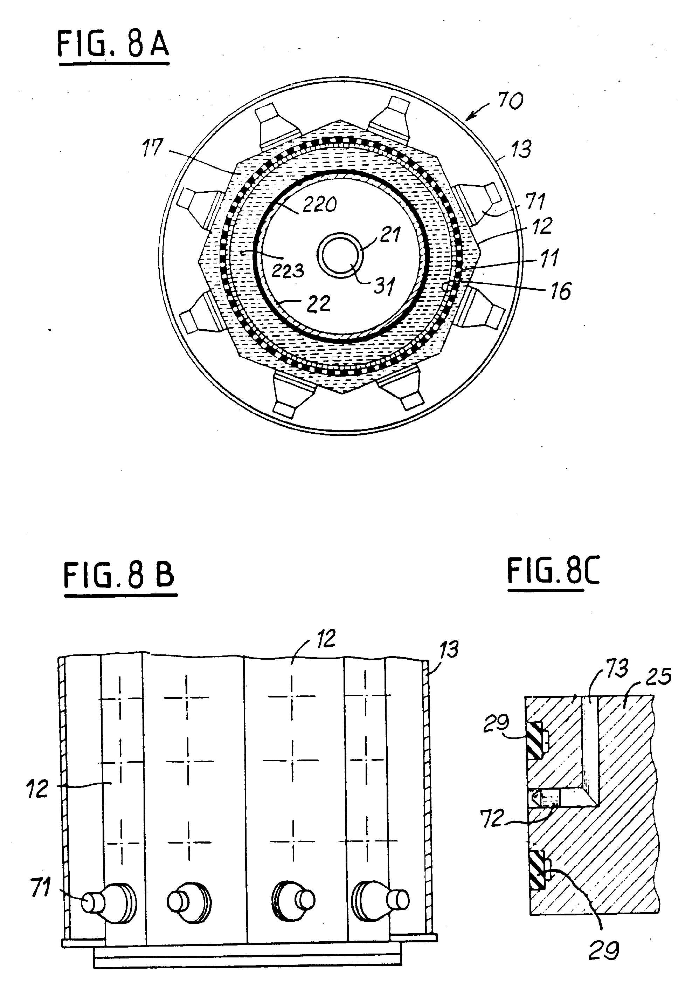

L'appareil selon l'invention comprend, aussi, un agencement de nettoyage 70 représenté notamment aux figures 8.

Cet agencement de nettoyage est constitué par exemple de générateurs à ultrasons 71 qui sont fixés sur l'enveloppe 12, par toute technique appropriée par exemple par collage. Dans ce cas on utilise une enveloppe polygonale. La disposition et l'étagement de ces générateurs 71 sont illustrés clairement sur les Fig. 8A et 8B. Ces générateurs 71 sont protégés par la coiffe 13 qui est réunie de toute manière appropriée de façon étanche à l'un des renforts 15. L'agencement de nettoyage comprend aussi, s'il y a lieu, des buses 72, qui sont ménagées à l'extrémité de tubulures 73, comme illustré en particulier sur la Fig. 8C, pourvues d'électrovannes 74. On a illustré sur la Fig. 8C un mode de réalisation où les buses 72 sont disposées dans la contre-bride 25 supérieure du groupe intérieur 20 dans le cas d'un joint 29 dédoublé. Ces buses sont réparties régulièrement. On peut aussi utiliser d'autres buses 720 placées sous la virole 14 inférieure du groupe extérieur 10, à la périphérie du groupe intérieur 20. Ces buses 720 sont ménagées, par exemple, dans un cercle creux fixé de manière appropriée par exemple à la virole. Ceci est illustré très schématiquement notamment sur la Fig. 1.

Ces buses sont alimentées en fluide par l'intermédiaire d'électrovannes 74 sous la dépendance des moyens de commande 90. On utilise par exemple de l'eau sous pression additionnée de détergents. On reviendra par la suite sur l'agencement de nettoyage.

L'appareil suivant l'invention est aussi équipée d'au moins une canalisation 80 pour l'évacuation notamment du liquide séparé de la substance à traiter. Cette canalisation est munie d'une électrovanne 81 sous la dépendance des moyens de commande 90.

Les moyens de commande 90 agissent notamment sur le dispositif de manoeuvre 60 et les électrovannes déjà énumérées comme on le comprendra par la suite afin d'assurer l'enchaînement correct des diverses phases de fonctionnement de l'appareil selon l'invention. Ces moyens de commande 90 sont, par exemple, un microcalculateur programmable. Il est clair qu'on peut aussi se servir de relais et de cames pilotés par un servomécanisme approprié ; ceci est classique.

Le corps 11 est aussi muni d'un filtre 16, qui se présente de préférence à la manière d'une cartouche interchangeable.

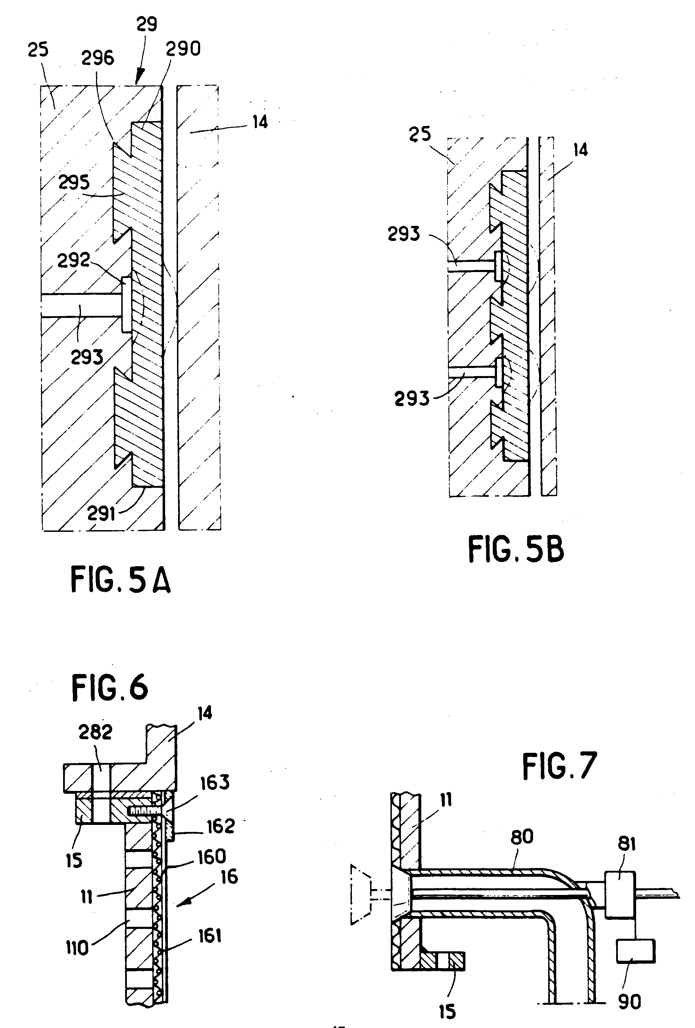

Ce filtre 16, (Fig. 6) de configuration de révolution, comprend un tamis 160 derrière lequel se trouve placé un réseau maillé 161 tel qu'un grillage servant de support mécanique notamment. Le tamis et le réseau sont réunis par des bagues 162 d'extrémité qui sont montées comme illustré en détail sur la Fig. 6, par exemple à l'aide de vis 163 à tête fraisée noyée engagées dans un renfort.

Comme on peut le voir en rapprochant les illustrations des Fig. 1, 5A, 5B et 6 notamment, un jeu déterminé est ménagé entre la périphérie des viroles et celle, qui lui fait face, des contre-brides; ces périphéries sont lisses et rien n'y fait saillie sauf lorsque les joints dilatables sont en expansion et qu'ils comblent alors ce jeu. Il en est de même en ce qui concerne le filtre et le racloir; le jeu déterminé permet au racloir de passer à proximité du tamis proprement dit. On observera, aussi, sur la Fig. 6, que les bagues du filtre sont un peu en retrait ou tout au plus affleurent la périphérie des viroles correspondantes. Aussi groupes extérieur et intérieur peuvent coulisser librement l'un par rapport à l'autre sans difficulté puisqu'ils sont dirigés par le guide.

On remarquera que les fixations adoptées permettent un démontage facile qui rend aisé les interventions de nettoyage, entretien ou réparation.

L'essentiel de la structure du mode de réalisation illustré de l'appareil selon l'invention exposé, on en décrira maintenant le fonctionnement.

Initialement l'appareil est dans la position représentée sur la Fig. 1. La trémie 40 est pleine de substance à traiter dont il faut séparer les matières solides du liquide où elles sont en suspension. Les moyens de commande 90 sont enclenchés. Ils agissent sur les électrovannes, en particulier sur celle 81 de la canalisation d'évacuation 80 pour l'ouvrir de même que sur les électrovannes 294 des tuyauteries 293 pour laisser au repos les joints 29 des contre-brides 25. Les joints occupent alors la position illustrée en trait continu sur les Fig. 5A et 5B; l'étanchéité n'est alors pas assurée entre groupes intérieur et extérieur qui sont libres de se déplacer sans entrave.

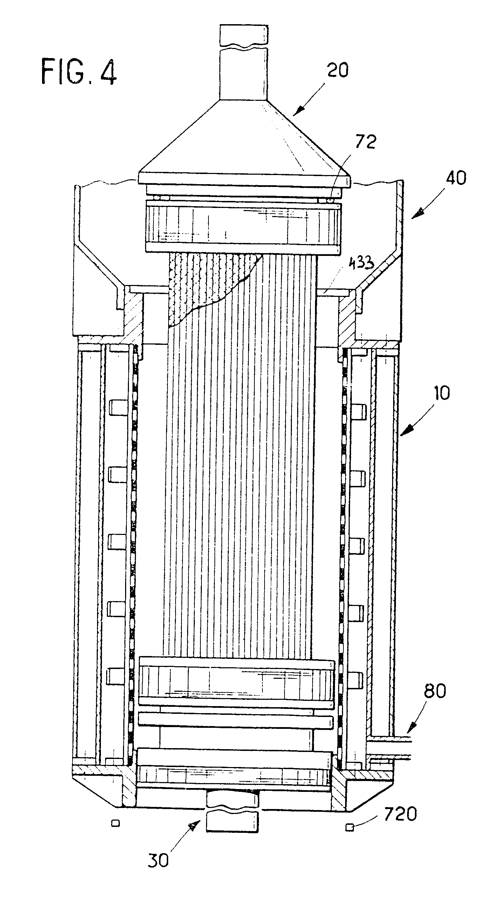

Le dispositif de manoeuvre 60 est actionné et fait coulisser le groupe intérieur par rapport au groupe extérieur comme illustré sur la Fig. 4. La bonde 43 est ouverte, le groupe intérieur soulevant le clapet et la substance à traiter emplit alors par gravité l'enceinte 223. Au fur et à mesure de son introduction du liquide se sépare spontanément des matières solides de la substance à traiter en traversant le filtre 16 et en s'écoulant dans la chambre 17. Lorsque l'enceinte 223 est pleine, les moyens de commande 90 agissent de nouveau sur le dispositif de manoeuvre 60 pour replacer l'appareil dans la position où il est illustré sur la Fig. 1.

Les joints d'étanchéité 29 sont alors gonflés, les moyens de commande 90 agissent sur les électrovannes 294 de la tuyauterie 293, afin de les dilater comme illustré en trait discontinu sur les Fig. 5A et 5B et d'assurer l'étanchéité entre les contre-brides 25 et les viroles 14, hautes et basses, des groupes intérieur et extérieur.

Les moyens de commande 90 agissent alors sur l'électrovanne 225 de la conduite 224 pour insuffler un fluide sous pression, par exemple de l'air comprimé afin de dilater la membrane élastique 220. Celle-ci se gonfle et chasse le liquide de la substance à traiter de l'enceinte 223 à la chambre 17 tout en pressant les matières solides contre le filtre 16.

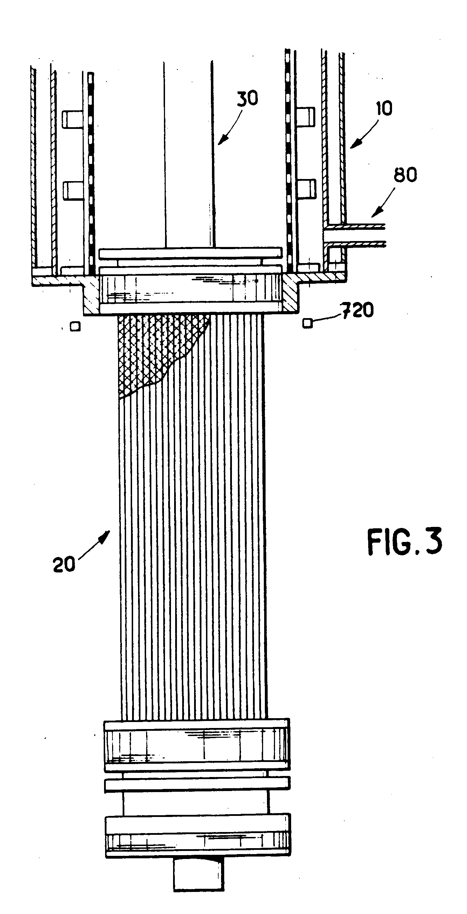

Lorsque l'opération est achevée, la membrane élastique 220 est dégonflée de même que les joints 29; pour ce faire les moyens de commande 90 agissant sur les électrovannes 225 et 294 respectivement. Les moyens de commande 90 agissent alors sur le dispositif de manoeuvre 60 pour placer l'appareil dans la position où il est illustré sur la Fig. 3, le groupe intérieur 20 étant pratiquement dégagé hors du groupe extérieur 10. La bonde 43 reste fermée car le clapet 430 ne suit pas le groupe intérieur et demeure sur son siège 432 où il repose.

Lorsque le groupe intérieur 20 passe à la position où il est illustré sur la Fig. 1 à celle où est dessiné sur la Fig. 3, le racloir 50 défile à proximité de la surface intérieure du filtre 16 et en décolle les matières solides compactées qui auraient tendance à y adhérer. Ces matières sont recueillies dans un bac convenable, non illustré, placé à la base de l'appareil d'où elles sont évacuées par exemple par un convoyeur. A ce propos on notera que la résille 222 qui revêt la membrane 220 évite que les cannelures 221 de drainage soient obturées et assure aussi, le cas échéant, leur décolmatage si besoin était.

A la fin de cette opération, le groupe intérieur 10 est replacé dans la position où il est illustré sur la Fig. 1 à l'aide du dispositif de manoeuvre 60 piloté par les moyens de commande 90.

Au cours de cette translation, descendante et/ou ascendant, les buses 72 et/ou 720 de l'agencement de nettoyage 70 ont pu opérer pour nettoyer respectivement le filtre 16, si ce dernier avait eu tendance à se colmater, et la membrane 220 si des matières solides adhéraient encore aux cannelures et/ou à la résille. Les buses sont alimentées en un fluide de nettoyage approprié, par exemple de l'eau sous pression additionnée d'agents convenablement adaptés à la nature des résidus dont il faut se débarasser. Ce fluide est acheminé par des tubulures 73 dont les électrovannes 74 sont mise en oeuvre aux instants appropriés, et pour les durées choisies, par les moyens de commande 90 afin que les opérations se déroulent suivant un enchaînement qui assure un fonctionnement correct et efficace de l'appareil suivant l'invention. Le fluide de nettoyage recueilli est récupéré ou évacué comme il est classique et pour cela non représenté; s'il y n'y a pas d'incompatibilité on peut se servir de la canalisation 80 sinon on utilise un circuit spécial particulier non représenté.

Dans le cas où ce nettoyage par les jets des buses n'est pas suffisant, ou au besoin indépendamment de ceci, on opère comme on indique maintenant.

L'électrovanne 81 de la canalisation 80 d'évacuation du liquide séparé est fermée et les joints 29 dilatés puis on emplit avec un fluide approprié et la chambre 17 et l'enceinte 223 et si besoin est, le cas échéant, on gonfle les joints qui sont à la périphérie des séparations 170 de manière à isoler les uns des autres les divers compartiments 173 qu'elles délimitent. Les moyens de commande 90 agissent si on le désire séquentiellement sur les différentes électrovannes 76 des tuyaux 75 pour le fluide de nettoyage et éventuellement, sur les électrovannes de gonflage des joints des séparations, de manière à moduler la pression et/ou le débit dans les différents compartiments. On peut ainsi décolmater le filtre suivant une loi que l'on a établie au préalable. Pour ce faire on utilise, par exemple, comme moyens de commande 90 un microcalculateur programmable. La manière dont on rédige la suite des instructions pour mettre en oeuvre un tel calculateur est bien connue et ne fait pas partie de l'invention.

On voit donc que l'on peut, en agissant sur les électrovannes obtenir une succession de pression et/ou de débit pendant des durée déterminées et suivant une chronologie que l'on peut choisir en fonction des besoins particuliers à satisfaire liés, en particulier, au filtre (nature, taille des pores) et aux produits résiduels.

Suivant la nature du fluide utilisé pour le nettoyage celui-ci peut s'écouler comme déjà indiqué directement dans la canalisation 80 d'évacuation du liquide traité ou si l'on utilise un liquide particulier, on peut le recycler après décantation 77, recomplètement 78 et pompage 79, suivant le schéma qui est illustré sur la Fig. 1.

La trémie 40 a été de nouveau remplie ou son niveau entretenu en substances à traiter et les opérations se renouvellent comme on vient de l'exposer.

Pour la facilité de l'exposé du fontionnement, les diverses phases et opérations ont été décrites successivement. Il est clair que par souci d'efficacité certaines de celles-ci peuvent être au moins partiellement simultanées.

Sur les Fig. 5A et 5B, on a représenté le détail de mode de réalisations de joints 29 gonflables. Ces joints peuvent être soit simples, comme illustré sur la Fig. 5A, soit doubles, comme illustré sur la Fig. 5B, voire dédoublés comme illustré sur la Fig. 8C. L'anneau 290 est, par exemple fait en un caoutchouc élastomère d'une dureté de 50, 60 Shore environ. S'il est nécessaire ce caoutchouc est adhérisé sur les surfaces des saignées du manchon 27, des contres-brides 25, des séparations 170. Ces anneaux de caoutchouc ont, par exemple, une épaisseur de 6 mm environ et une longueur de 80 mm environ. Ils sont agencés de manière que leur surface extérieure soit dans le prolongement de la surface extérieure des contres-brides et manchon, comme illustré. On obtient un bon fonctionnement en ménageant un jeu maximal de l'ordre de 5 à 6 mm entre la surface extérieure des contres-brides et manchon d'une part et la surface intérieure du filtre ou des viroles d'autre part. L'existence de ce jeu ne nuit aucunement à la qualité de la translation relative des groupes intérieur et extérieur car leur déplacement est dirigé par le guide 30, la paroi intérieure 32 du tube 21 coulissant pratiquement sans jeu sur la colonne 31.

En examinant la Fig. 6, on voit la manière dont le filtre 16 est construit. Sous le tamis 160 proprement dit se trouve placé un réseau maillé 161, analogue à un grillage, qui contribue à sa tenue mécanique et assure le drainage du liquide qui se sépare de la substance à traiter.

Le filtre 16 est maintenu à l'aide de vis 163 engagées dans les renforts 15, comme illustré. Comme on le voit, les têtes des vis sont noyées dans les bagues de manière à ne pas faire saillie. On comprend donc que le racloir peut glisser sans être le moins du monde gêner.

Le mode de montage adopté étant celui illustré on voit qu'il très facile de changer le filtre qui se présente comme une entité interchangeable, pour le remplacer par un autre lorsque le besoin s'en fait sentir. Par exemple, lorsque le filtre est usagé ou bien lorsqu'on veut le changer par un autre dont les caractéristiques sont différentes de manière à bien l'adapter à la nature de la substance à traiter.

La Fig. 7 illustre un mode particulier de réalisation de l'électrovanne 81 qui permet de récupérer, par la canalisation d'évacuation 80, les fluides de lavage et/ou liquide séparé.

Sur la Fig. 8C est illustré un mode de réalisation des buses 72 logées dans la contre-bride 25 supérieure ; ces buses permettent d'asperger par des jets sous pression le filtre 16 lors de la récupération des matières solides.

La plupart des tuyaux, tuyauteries, tubulures, conduites et autres canalisations étant branchés entre des parties fixes et mobiles, des raccords souples appropriés sont placés là où il le faut, comme il est classique.

En se reportant à la Fig. 9, on voit la manière dont est monté un mode de réalisation d'un dispositif de manoeuvre 60. Dans ce mode de réalisation on utilise deux vérins pneumatiques ou hydrauliques disposés de part et d'autre de l'appareil. Comme on le voit, l'un des groupes est rendu solidaire de la tige du vérin alors que l'autre groupe est, lui, solidaire du cylindre; on peut bien sûr adopter une solution inverse. La solidarisation groupes-vérin est obtenue comme il est classique, à l'aide de goussets, pattes ou analogues, vissés ou soudés, par exemple, aux endroits appropriés. Dans ce mode de réalisation seul le groupe intérieur est mobile entre les positions illustrées en trait continu et discontinu. Ce vérin et le guide sont ancrés convenablement à un bâti, non illustré.

La Fig. 10 illustre un autre mode de réalisation d'un dispositif de manoeuvre 60. Dans ce cas, ce dernier comprend un vérin au moins qui agit sur le groupe extérieur auquel est associée la trémie et un vérin, ou analogue, qui agit directement ou indirectement par une transmission flexible 63 et poulies de renvoi 64, par exemple comme illustré, sur le groupe intérieur de manière que ces deux groupes soient mobiles tous les deux, séparément et relativement l'un à l'autre, et indépendamment l'un de l'autre. En faisant descendre le groupe intérieur de la position où il est représenté, pour l'engager totalement dans le groupe extérieur on emplit l'enceinte de substance à traiter. Cette disposition convient bien lorsque cette substance à traiter est relativement consistante, épaisse et/ou visqueuse; en effet cette substance s'écoule alors mal spontanément par gravité et la descente du groupe intérieur favorise son entraînement. Pressage fait, on maintient le groupe intérieur en position basse et on soulève le groupe extérieur ce qui permet de recueillir les matières solides. La coordination du fonctionnement est assurée par les moyens de commande.

Un appareil suivant l'invention, peut être utilisé seul ou regroupé avec plusieurs autres, en grappe ou batterie opérant simultanément ou successivement de manière à obtenir un fonctionnement pratiquement continu et d'une grande fiabilité; en effet si l'un des appareils venait à faillir on pourrait continuer à travailler avec les autres appareils restant en bon état de service.

Grâce à un tel regroupement, on facilite aussi les problèmes d'entretien puisqu'avec un minimum de pièces de rechange, convenablement choisies, il est possible d'assurer des réparations ou l'entretien préventif sans avoir à arrêter totalement le fonctionnement de l'ensemble des appareils d'une installation.

Grâce à l'appareil suivant l'invention on obtient des matières solides compactées qui présentent un taux de siccité de 45 à 50 % au moins en matières sèches.

Ainsi, obtenir directement une siccité des matières solides récupérées qui est au moins égale à 43%, sans qu'il soit nécessaire d'ajouter des adjuvants ou des minéraux de charge pour améliorer la séparation des matières solides du liquide est un avantage. En particulier, il n'est pas nécessaire d'ajouter de la chaux ou des ferrochroïdes. Cet avantage est particulièrement important lorsqu'on traite des effluents d'une station d'épuration urbaine. Grâce à ceci les matières solides récupérées dans le bac de recueil sont directement envoyées dans un concasseur puis, de là, dirigées vers une extrudeuse à vis. Cette extrudeuse permet d'obtenir directement des granulés de l'ordre de 5 à 6 mm de diamètre et d'une longueur pratiquement égale car les matières solides obtenues avec ce taux de siccité au moins égal à 43% présentent une bonne résistance mécanique qui leur assure une cohésion qui permet d'obtenir des granulés directement à la sortie de l'extrudeuse; les boudins contigüs qui sortent des filières de l'extrudeuse sont suffisamment secs pour ne pas s'infléchir et coller entre eux et se réagglomérer mais, au contraire, pour se rompre spontanément aussitôt que leur longueur avoisine leur diamètre. Les granulés ainsi obtenus peuvent être entreposés par exemple sous abri et à l'air libre pour parachever le séchage et obtenir un taux de siccité de 95 % en matière sèche. On peut aussi accélérer le processus en les stockant dans des silos à ventilation forcée, au besoin chauffée.

Grâce à ceci, il est possible de valoriser les matières solides ainsi récupérées, par exemple pour servir de combustible dans des centrales thermiques d'incinération, pour les épandre directement dans les champs sous forme d'engrais grâce aux équipements traditionnels actuels dont dispose les agriculteurs sans adaptation spéciale aucune. Il est aussi possible de soumettre les granulés ainsi obtenus à une gazéification par pyrolise afin de récupérer des gaz propres combustibles.

Dans ce qui précède, on a décrit un appareil suivant l'invention qui présente une symétrie de révolution et qui est, de préférence, d'une construction cylindrique. Il est clair qu'on peut donner à cet appareil une très petite conicité, avec un angle de l'ordre de 1° ou 2° pour faciliter la séparation du groupe mobile par rapport au groupe fixe et permettre aussi un démoulage plus commode des matières solides pressées contre le filtre.

## Revendications

1. Appareil pour la séparation en ses deux phases d'une substance composée de matières solides en suspension dans un liquide et pour leur récupération distincte à l'état de solides compactés d'un taux de siccité important et à l'état de liquide pratiquement exempt de matières solides qui comprend, entre autres, un groupe extérieur (10) et un groupe intérieur (20) à symétrie de révolution mobiles relativement l'un à l'autre et qui délimitent une chambre (17) et une enceinte (223) séparées par un corps (11) perméable au liquide et imperméable aux matières solides, et qui comprend une membrane élastique (220) étanche et expansible agencée de manière à permettre la réduction du volume de l'enceinte (223) afin de chasser le liquide de la substance à traiter qui a été placée dans l'enceinte (223) et afin de presser les matières solides contre le corps (11), et un racloir (50) pour contribuer à détacher les matières solides pressées contre le corps (11) afin de les recueillir séparément, caractérisé en ce qu'il comprend un guide central (30) vertical pour diriger les déplacements relatifs des groupes extérieur (10) et intérieur (20) et une trémie (40) d'alimentation en substance à traiter qui surmonte le groupe extérieur (10) auquel elle est fixée et qui est obturée à sa partie inférieure par une bonde (43) centrée sur le guide (30).

2. Appareil selon la revendication 1, caractérisé en ce que le guide central (30) comprend une colonne (31) et un tube (21) engagés l'un dans l'autre de manière à pouvoir coulisser relativement.

3. Appareil selon la revendication 2, caractérisé en ce que le groupe intérieur (20) comprend le tube (21), fixées à chacune des extrémités de ce tube (21) des couronnes (23), montées sur chacune des couronnes (23) des brides (24) et associées à chacune des brides (24) des contre-brides (25) périphériques les entourant partiellement de manière à enserrer la membrane (220) pour la retenir.

4. Appareil selon la revendication 3, caractérisé en ce que chaque bride (24) et contre-bride (25) présentent, chacune, un flanc conique (240, 250) particulier et en ce que ces flancs (240,250) sont complémentaires et agencés pour se faire face et être réglables afin de coincer et tendre la membrane (220).

5. Appareil selon la revendication 3 ou 4, caractérisé en ce que le racloir (50) est constitué par une arête (51) périphérique de la contre-bride et en ce que cette arête présente un angle en contre-dépouille.

6. Appareil selon l'une quelconque des revendications 3 à 5, caractérisé en ce qu'entre les couronnes (23) et coaxialement au tube (21), est montée une jupe (22) contre laquelle peut reposer la membrane (220) qui avec le corps (11) délimite l'enceinte (223).

7. Appareil selon l'une quelconque des revendications 3 à 5, caractérisé en ce que le groupe extérieur (10) comprend le corps (11), fixées à chacune des extrémités de ce corps (11) des viroles (14) et montée entre ces virolles (14) et à l'extérieur de ce corps (11) une enveloppe (12) qui délimite avec lui la chambre (17).

8. Appareil selon l'une quelconque des revendications 1 à 7, caractérisé en ce que la trémie (40) comprend une cuve (41), un entonnoir (42) qui en constitue le fond et au milieu duquel est placée la bonde (43).

9. Appareil selon la revendication 8, caractérisé en ce que la bonde (43) comprend un clapet (430) annulaire mobile sur la colonne (31) et un siège (432).

10. Appareil selon la revendication 9, caractérisé en ce que le siège (432) est porté par une virole (14) et le clapet (430) a la configuration d'une cloche dont le rebord (431) coopère avec le siège (432).

11. Appareil selon l'une quelconque des revendications 1 à 10, caractérisé en ce que la chambre (17) comprend des séparations (170) annulaires la divisant en compartiments (173) étagés.

12. Appareil selon la revendication 11, caractérisé en ce que les séparations (170) sont constituées de cloisons (171) réunies par des entretoises (172).

13. Appareil selon la revendication 11 ou 12, caractérisé en ce que les séparations (170) portent à leur périphérie des joints (174) pour isoler au moins certains des compartiments les uns des autres.

14. Appareil selon la revendication 13, caractérisé en ce que les joints (174) sont dilatables.

15. Appareil selon l'une quelconque des revendications 1 à 4, caractérisé en ce que des joints (29) sont placés entres groupes extérieur (10) et intérieur (20) pour assurer une étanchéité au moins temporaire.

16. Appareil selon la revendication 15, caractérisé en ce que les joints (29) sont expansibles.

17. Appareil selon la revendication 16, caractérisé en ce que les joints (29 et/ou 174) sont constitués d'un anneau (290) élastique logé dans une gorge (291) creusée d'une rainure (292) et ménagés dans une contre-bride (25).

18. Appareil selon la revendication 17, caractérisé en ce que l'anneau (290) présente un bourrelet (295) en queue d'aronde engagé dans une saignée (296) complémentaire de la contre-bride (25).

19. Appareil selon l'une quelconque des revendications 1 à 18, caractérisé en ce qu'il comprend un dispositif de manoeuvre (60) pour provoquer les déplacements relatifs entre groupes intérieur (10) et extérieur (20).

20. Appareil selon la revendication 19, caractérisé en ce que ce dispositif (60) comprend au moins un vérin dont la tige (61) et le cylindre (62) sont associés l'un au groupe intérieur (20) et l'autre au groupe extérieur (10).

21. Appareil selon la revendication 20, caractérisé en ce que l'un des groupes extérieur (10) et intérieur (20) est fixe et l'autre est mobile.

22. Appareil selon la revendication 20, caractérisé en ce que le groupe extérieur (10) et le groupe intérieur (20) sont tous les deux mobiles.

23. Appareil conforme à l'une quelconque des revendications 1 à 22, caractérisé en ce q'il comprend un filtre (16) placé dans l'enceinte (223) contre le corps (11).

24. Appareil selon la revendication 23, caractérisé en ce que le filtre (16) est constitué d'une cartouche interchangeable faite d'un tamis (160) appliqué contre un réseau maillé (161) et terminée à chacune de ses extrémités d'une bague (162).

25. Appareil selon l'une quelconque des revendications 1 à 24, caractérisé en ce qu'il comprend des moyens de commande (90) pour assurer le synchronisme des opérations de fonctionnement.

26. Appareil selon la revendication 25, caractérisé en ce que les moyens de commande (90) actionnent le dispositif de manoeuvre (60) et des électrovannes (225, 294, 74, 76, 81).

27. Appareil selon l'une quelconque des revendications 1 à 26, caractérisé en ce qu'il comprend un agencement de nettoyage (70).

28. Appareil selon la revendication 27, caractérisé en ce que cet agencement de nettoyage (70) comprend des générateurs d'ultrasons (71) fixés sur l'enveloppe (12).

29. Appareil selon l'une des revendications 27 ou 28, caractérisé en ce que cet agencement de nettoyage (70) comprend des buses (72 et/ou 720) pour diriger des jets de fluide en direction du corps (11) et/ou de la membrane (220).

**Patentansprüche**

1. Vorrichtung zur Trennung einer Substanz, zusammengesetzt aus Feststoffen in Suspension in einer Flüssigkeit, in ihre beiden Phasen und zu ihrer getrennten Rückgewinnung im Zustand von kompakten Feststoffen mit einem hohen Trockenheitsgrad und im Zustand einer von Feststoffen praktisch freien Flüssigkeit, die unter anderem eine Außengruppe (10) und eine Innengruppe (20) mit Rotationssymmetrie, die relativ zueinander beweglich sind und eine Kammer (17) und einen Raum (223) abgrenzen, die durch einen für die Flüssigkeit durchlässigen und für die Feststoffe undurchlässigen Körper (11) getrennt sind, und die eine dichte und ausdehnbare elastische Membran (220), die so angeordnet ist, daß sie die Reduzierung des Volumens des Raums (223) gestattet, um die Flüssigkeit der zu behandelnden Substanz, die in den Raum (223) eingebracht worden war, herauszutreiben und die Feststoffe an den Körper (11) anzupressen, und einen Abstreicher (50) umfaßt, der zum Ablösen der an den Körper (11) angepreßten Feststoffe beiträgt, um sie getrennt aufzunehmen, dadurch gekennzeichnet, daß sie eine zentrale vertikale Führung (30) zum Führen der Relativbewegungen der Außengruppe (10) und der Innengruppe (20) und einen Bunker (40) zur Beschickung mit der zu behandelnden Substanz umfaßt, der über der Außengruppe (10) angeordnet ist, an der er befestigt ist, und der in seinem unteren Teil durch einen auf die Führung (30) zentrierten Stopfen (43) verschlossen ist.

2. Vorrichtung nach Anspruch 1, dadurch gekennzeichnet, daß die zentrale Führung (30) eine Säule (31) und ein Rohr (21) umfaßt, die so ineinandergesteckt sind, daß sie zueinander gleiten können.

3. Vorrichtung nach Anspruch 2, dadurch gekennzeichnet, daß die Innengruppe (20) das Rohr (21), kränze (23), die an jedem der Enden des Rohrs (21) befestigt sind, Flansche (24), die auf den Kränzen (23) montiert sind, und den Flanschen (24) zugeordnete Umfangs-Gegenflansche (25) umfaßt, die diese teilweise umgeben, so daß sie die Membran (220) einklemmen, um sie festzuhalten.

4. Vorrichtung nach Anspruch 3, dadurch gekennzeichnet, daß jeder Flansch (24) und jeder Gegenflansch (25) jeweils eine besondere konische Flanke (240, 250) aufweist und daß diese Flanken (240, 250) zueinander komplementär und so angeordnet sind, daß sie einander gegenüberstehen und verstellbar sind, um die Membran (220) einzuklemmen und zu spannen.

5. Vorrichtung nach Anspruch 3 oder 4, dadurch gekennzeichnet, daß der Abstreicher (50) aus einer Umfangskante des Gegenflansches besteht und daß diese Kante einen Hinterschneidungswinkel besitzt.

6. Vorrichtung nach einem der Ansprüche 3 bis 5, dadurch gekennzeichnet, daß zwischen den Kränzen (23) koaxial zum Rohr (21) ein Mantel (22) montiert ist, an dem die Membran (220) anliegen kann, die mit dem Körper (11) den Raum (223) abgrenzt.

7. Vorrichtung nach einem der Ansprüche 3 bis 5, dadurch gekennzeichnet, daß die Außengruppe (10) den Körper (11), Ringe (14), die an den Enden des Körpers (11) befestigt sind, und eine zwischen diesen Ringen (14) und außerhalb des Körpers (11) montierte Hülle (12) umfaßt, die mit diesem die Kammer (17) abgrenzt.

8. Vorrichtung nach einem der Ansprüche 1 bis 7, dadurch gekennzeichnet, daß der Bunker (40) einen Behälter (41) und einen Trichter (42) umfaßt, der dessen Boden bildet und in dessen Mitte der Stopfen (43) angeordnet ist.

9. Vorrichtung nach Anspruch 8, dadurch gekennzeichnet, daß der Stopfen (43) ein ringförmiges, auf der Säule (31) bewegliches Ventil (430) und einen Sitz (432) umfaßt.

10. Vorrichtung nach Anspruch 9, dadurch gekennzeichnet, daß der Sitz (432) von einem Ring (14) getragen ist und daß das Ventil (430) die Form einer Glocke hat, deren Rand (431) mit dem Sitz (432) zusammenwirkt.

11. Vorrichtung nach einem der Ansprüche 1 bis 10, dadurch gekennzeichnet, daß die Kammer (17) ringförmige Trennungen (170) umfaßt, die sie in gestufte Abteile (173) teilt.

12. Vorrichtung nach Anspruch 11, dadurch gekennzeichnet, daß die Teilungen (170) von Wänden (171) gebildet sind, die durch Stege (172) miteinander verbunden sind.

13. Vorrichtung nach Anspruch 11 oder 12, dadurch gekennzeichnet, daß die Trennungen (170) an ihrem Umfang Dichtungen (174) tragen, um wenigstens manche Abteile gegeneinander zu isolieren.

14. Vorrichtung nach Anspruch 13, dadurch gekennzeichnet, daß die Dichtungen (174) dehnbar sind.

15. Vorrichtung nach einem der Ansprüche 1 bis 4, dadurch gekennzeichnet, daß die Dichtungen (29) zwischen der Außengruppe (10) und der Innengruppe (20) angeordnet sind, um eine wenigstens zeitweise Dichtung zu gewährleisten.

16. Vorrichtung nach Anspruch 15, dadurch gekennzeichnet, daß die Dichtungen (29) ausdehnbar sind.

17. Vorrichtung nach Anspruch 16, dadurch gekennzeichnet, daß die Dichtungen (29 und/oder 174) aus einem elastischen Ring (290) bestehen, der in einer Nut (291) sitzt, die eine Rille (292) aufweist und in einem Gegenflansch (25) vorgesehen ist.

18. Vorrichtung nach Anspruch 17, dadurch gekennzeichnet, daß der Ring (290) einen schwalbenschwanzförmigen Wulst (295) besitzt, der in eine komplementäre Nut des Gegenflansches (25) eingeführt ist.

19. Vorrichtung nach einem der Ansprüche 1 bis 18, dadurch gekennzeichnet, daß sie eine Betätigungsvorrichtung (60) zur Erzeugung der Relativbewegungen zwischen der Innengruppe (10) und der Außengruppe (20) umfaßt.

20. Vorrichtung nach Anspruch 19, dadurch gekennzeichnet, daß diese Vorrichtung (60) wenigstens eine Kolben-Zylinder-Einheit umfaßt, deren Stange (61) und deren Zylinder (62) der Innengruppe (20) bzw. der Außengruppe (10) zugeordnet sind.

21. Vorrichtung nach Anspruch 20, dadurch gekennzeichnet, daß die Außengruppe (10) oder die Innengruppe (20) feststehend ist, wobei jeweils die andere beweglich ist.

22. Vorrichtung nach Anspruch 20, dadurch gekennzeichnet, daß die Außengruppe (10) und die Innengruppe (20) beide beweglich sind.

23. Vorrichtung nach einem der Ansprüche 1 bis 22, dadurch gekennzeichnet, daß sie ein Filter (16) umfaßt, das in dem Raum (223) am Körper (11) anliegend angeordnet ist.

24. Vorrichtung nach Anspruch 23, dadurch gekennzeichnet, daß das Filter (16) von einer austauschbaren Kartusche gebildet ist, die aus einem Sieb (160) besteht, das an einem Maschennetz (161) anliegt, und an jedem seiner Enden einen Ring (162) aufweist.

25. Vorrichtung nach einem der Ansprüche 1 bis 24, dadurch gekennzeichnet, daß sie Steuereinrichtungen (90) zur Synchronisierung der Arbeitsgänge des Betriebs umfaßt.

26. Vorrichtung nach Anspruch 25, dadurch gekennzeichnet, daß die Steuereinrichtungen (90) die Betätigungsvorrichtung (60) und Magnetventile (225, 294, 74, 76, 81) betätigen.

27. Vorrichtung nach einem der Ansprüche 1 bis 26, dadurch gekennzeichnet, daß sie eine Reinigungsanordnung (70) umfaßt.

28. Vorrichtung nach Anspruch 27, dadurch gekennzeichnet, daß diese Reinigungsanordnung (70) Ultraschallgeneratoren (71) umfaßt, die an der Hülle (12) befestigt sind.

29. Vorrichtung nach einem der Ansprüche 27 oder 28, dadurch gekennzeichnet, daß diese Reinigungsanordnung (70) Düsen (72 und/oder 720) umfaßt, die Fluidstrahlen in Richtung auf den Körper (11) und/oder die Membran (220) richten.

**Claims**

1. Means for separating a substance consisting of solid materials in suspension in a liquid into its two phases and for the separate recovery of the latter in the compacted solid state with a high dry matter content and the virtually solid-matter-free liquid state comprising, among other things, an outer unit (10) and inner unit (20) having symmetry of revolution which can move relative to each other and which bound a chamber (17) and an enclosure (223) separated by a body (11) which is permeable to the liquid and impermeable to the solid materials, and which comprises a fluid-tight and expandable elastic membrane (220) arranged in such a way that the volume of the enclosure (223) can be reduced, in order to expel liquid from the substance being processed which has been placed in the enclosure (223) and to press the solid matter between the body (11), and a scraper (50) to help detach the solid matter pressed against the body (11) in order that it can be recovered separately, characterised in that it comprises a vertical central guide (30) to direct the relative displacements of the outer (10) and inner (20) units and a feed hopper (40) for the material being processed which is mounted on the outer unit (10) to which it is attached, and which is obstructed in its lower part by means of a bung (43) centred on the guide (30).

2. Means according to claim 1, characterised in that the central guide (30) comprises a column (31) and a tube (21) which engage one another in such way that they can slide relative to each other.

3. Means according to claim 2, characterised in that the inner unit (20) comprises a tube (21), rings (23) fixed to each of the ends of this tube (21), flanges (24) mounted on each of the rings (23) and peripheral mating flanges (25) associated with each of the flanges (24) and partly surrounding them in such a way as to secure the membrane (220) in order to hold it in place.

4. Means according to claim 3, characterised in that each flange (24) and mating flange (25) have their own tapering sides (240, 250) and in that these sides (250, 250) are complementary and arranged in such a way as to face each other and be adjustable so as to trap and tension the membrane (220).

5. Means according to claim 3 or 4, characterised in that the scraper (50) comprises a peripheral edge (51) of the mating flange and in that this edge has an undercut angle.

6. Means according to any one of claims 3 to 5, characterised in that a skirt (22) against which the membrane (220) can rest, which together with body (11) bounds the enclosure (223), is fitted between the rings (23) coaxially with the tube (21).

7. Means according to any one of claims 3 to 5, characterised in that the outer unit (10) comprises the body (11), shells (14) fixed to each of the ends of this body (11) and an envelope (12) mounted between the shells (14) and the outside of the body (11) which bounds the chamber (17) therewith.

8. Means according to any one of claims 1 to 7, characterised in that the hopper (40) comprises a vessel (41), a funnel (42) forming the base thereof, in the middle of which is placed the bung (43).

9. Means according to claim 8, characterised in that the bung (43) comprises an annular valve (430) which can move on the column (31) and a seat (432).

10. Means according to claim 9, characterised in that the seat (432) is borne by a shell (14) and the valve (430) has the shape of a bell whose edge (431) acts together with the seat (432).

11. Means according to any one of claims 1 to 10, characterised in that the chamber (17) comprises annular partitions (170) which subdivide it into stepped compartments (173).

12. Means according to claim 11, characterised in that the partitions (170) comprise partition walls (171) connected by struts (172).

13. Means according to claim 11 or 12, characterised in that the partitions (170) bear seals (174) at their perimeter to isolate at least some of the compartments from each other.

14. Means according to claim 13, characterised in that the seals (174) are expandable.

15. Means according to any one of claims 1 to 4, characterised in that seals (29) are placed between the outer (10) and inner (20) units to provide a fluid-tight seal, at least temporarily,

16. Means according to claim 15, characterised in that the seals (29) are expandable.

17. Means according to claim 18, characterised in that the seals (29 and/or 174) comprise an elastic ring (290) housed in a slot (291) formed in a groove (292) provided in a mating flange (25).

18. Means according to claim 17, characterised in that the ring (290) has a dovetailed strip (295) which engages a complementary curve (296) in the mating flange (25).

19. Means according to any one of claims 1 to 18, characterised in that it comprises a control device (60) to cause relative movements between the inner (10) and outer (20) units.

20. Means according to claim 19, characterised in that this device (60) comprises at least one jack screw whose rod (61) and cylinder (62) are associated, one with the inner unit (20) and the other with the outer unit (10).

21. Means according to claim 20, characterised in that one of the outer (10) and inner (20) units is fixed and the other is mobile.

22. Means according to claim 20, characterised in that the outer unit (10) and the inner unit (20) are both mobile.

23. Means according to any one of claims 1 to 22, characterised in that it comprises a filter (16) placed within the enclosure (223) against the body (11).

24. Means according to claim 23, characterised in that the filter (16) comprises an interchangeable cartridge constructed of a screen (160) applied against a mesh body (161) and ending at each end in a ring (162).

25. Means according to any one of claims 1 to 24, characterised in that it includes control means (90) to ensure synchrony in operation.

26. Means according to claim 25, characterised in that the control means (90) activate the control device (60) and electrical valves (225, 294, 74, 76, 81).

27. Means according to any one of claims 1 to 26, characterised in that it comprises cleaning means (70).

28. Means according to claim 27, characterised in that this cleaning means (70) comprises ultrasonic generators (71) attached to the envelope (12).

29. Means according to any one of claims 27 or 28, characterised in that this cleaning means (70) comprises nozzles (72 and/or 720) to direct jets of fluid in the direction of the body (11) and/or the membrane (220).

# FIG.1

FIG.2

FIG.3

FIG. 4

FIG.5A

FIG.5B

FIG.6

FIG.7

# FIG. 8A

# FIG. 8 B

# FIG. 8C

FIG.9

FIG.10